# EUROPÄISCHE PATENTSCHRIFT

(11) **EP 1 214 380 B1**
(45) Veröffentlichungstag und Bekanntmachung des Hinweises auf die Patenterteilung: **27.01.2010**
(21) Anmeldenummer: 00962348.9
(22) Anmeldetag: 22.08.2000
(51) Int. Cl.: C08L 69/00, C08K 5/5353, C08K 5/5357, C08K 3/00, C08L 55/02, C08L 25/12, C08L 27/18

(54) **FLAMMWIDRIGE POLYCARBONAT-BLENDS**
FLAME-RESISTANT POLYCARBONATE BLENDS
MELANGES DE POLYCARBONATE IGNIFUGEANTS

(30) Priorität: 02.09.1999 DE 19941824
(43) Veröffentlichungstag der Anmeldung: 19.06.2002
(73) Patentinhaber: Bayer MaterialScience AG, 51368 Leverkusen (DE)
(72) Erfinder: ZOBEL, Michael, 40547 Düsseldorf (DE); ECKEL, Thomas, 41540 Dormagen (DE); DERR, Torsten, 41542 Dormagen (DE); WITTMANN, Dieter, 51375 Leverkusen (DE)
(86) Internationale Anmeldenummer: PCT/EP2000/008160
(87) Internationale Veröffentlichungsnummer: WO 2001/018117

(56) Entgegenhaltungen:
- DE-A- 19 734 661
- US-A- 5 844 028

## Beschreibung

Die vorliegende Erfindung betrifft Polycarbonat/ABS-Blends, enthaltend Phosphanatamine und anorganische Nanopartikel, die einen verbesserten Flammschutz und verbesserte mechanische Eigenschaften wie Tieftemperatur-Kerbschlagzähigkeit, gute Reißdehnung, Bindenahtfestigkeit und Spannungsrißbeständigkeit sowie einen verbesserten Yellowness Grad aufweisen.

US-P 4 073 767 und 5 844 028 beschreiben cyclische Phosphorverbindtingen einschließlich Phosphorinan-Ringe als geeignete Flammschutzmittel für Polyurethane, Polyester, Polycarbonate und Polyamide. In US-P 4 397 750 werden bestimmte cyclische Phosphonatester als effiziente Flammschutzmittel für Polypropylen und andere Polyolefine beschrieben. In US-P 5 276 066 und US-P 5 844 028 werden bestimmte (1,3,2-Dioxaphosphorinanmethan)-Amine beschrieben, die geeignete Flammschutzmittel für Polyurethane, Polyester, Styrolpolymere, PVC, PVAc oder Polycarbonat darstellen.

US-P 3 505431, FR-P 1 371 139, US-P 3 711 577, US-P 4 054 544 beschreiben acyclische Triphosphonatamine, die z.T. halogeniert sind.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können.

In EP-A 0 363 608 werden flammwidrige Polymermischungen aus aromatischem Polycarbonat, styrolhaltigem Copolymer oder Pfropfcopolymer sowie oligomeren Phosphaten als Flammschutzadditive beschrieben. Für manche Anwendungen, wie beispielsweise Formteile im Innern von Gehäuseteilen, ist die Wärmeformbeständigkeit dieser Mischungen oft nicht ausreichend.

In US-P 5 061 745 werden Polymermischungen aus aromatischem Polycarbonat, ABS-Pfropfpolymerisar und/oder styrolhaltigem Copolymer und Monophosphaten als Flammschutzadditive beschrieben. Zur Herstellung dünnwandiger Gehäuseteile ist das Niveau der Spannungsrißbeständigkeit dieser Mischungen oft nicht ausreichend.

Aufgabe der vorliegenden Erfindung ist die Bereitstellung von hochwärmeformbeständigen Polycarbonat/ABS-Blends mit einer verbesserten Flammfestigkeit, und verbesserten mechanischen Eigenschaften wie Tieftemperaturzähigkeit, Reißdehnung, Bindenahtfestigkeit und Spannungsrißbeständigkeit sowie einem verbesserten Yellowness-Grad. Diese Eigenschaftskombination wird besonders bei Anwendungen im Bereich Datentechnik wie etwa für Gehäuse von, Monitoren, Druckern oder Kopierer gefordert.

Es wurde nun gefunden, daß PC/ABS-Blends, die Phosphanatamine in Kombination mit anorganischen Nanopartikeln enthalten, die gewünschten Eigenschaften aufweisen.

Gegenstand der Erfindung sind daher Blends enthaltend Polycarbonat und/oder Polyestercarbonat, Schlagzähmodifikator, Phosphonatamine und anorganisches Pulver mit einem durchschnittlichen Teilchendurchmesser kleiner gleich 200 nm, welche weitere Polymere, beispielsweise thermoplastische Vinyl(co)polymerisate und/oder Polyalkylenterephthalate und gegebenenfalls andere Zusatzstoffe enthalten können. Die Polycarbonat-Blends enthalten vorzugsweise 0,1 bis 30, insbesondere 1 bis 25 und ganz besonders bevorzugt 2 bis 20 Gew.-Teile Phosphonatamin der unten aufgeführten Formel (I) und vorzugsweise 0,5 bis 45, insbesondere 1 bis 25 und ganz besonders bevorzugt 2 bis 15 Gew.-Teile der anorganischen Pulver gemäß Komponente E).

Gegenstand der Erfindung sind vorzugsweise Blends enthaltend
A) 40 bis 99, vorzugsweise 60 bis 98,5 Gew.-Teile aromatisches Polycarbonat und/oder Polyestercarbonat
B) 0,5 bis 60, vorzugsweise 1 bis 40, insbesondere 2 bis 25 Gew.-Teile Pfropfpolymerisat von
   B.1) 5 bis 95, vorzugsweise 30 bis 80 Gew.-% eines oder mehrerer Vinylmonomeren auf
   B.2) 95 bis 5, vorzugsweise 20 bis 70 Gew.% einer oder mehrerer Pfropfgrundlagen mit einer Glasumwandlungstemperatur <10°C, vorzugsweise <0°C, besonders bevorzugt < -20°C,
C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,
D) 0,1 bis 30 Gew.-Teile, vorzugsweise 1 bis 25 Gew.-Teile, besonders bevorzugt 2 bis 20 Gew.-Teile Phosphonatamin der Formel (I)

   A_{3-y}-N-B_{y} (I),

   in welcher
   A für einen Rest der Formel (IIa) 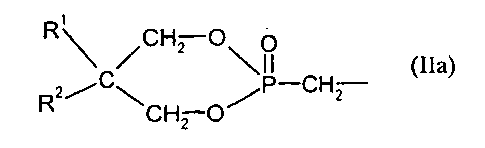 oder (IIb) 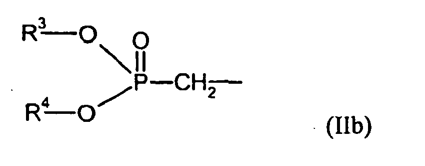 steht,
   - R¹ und R²: unabhängig voneinander für unsubstituiertes oder substituiertes C₁-C₁₀-Alkyl oder für unsubstituiertes oder substituiertes C₆-C₁₀- Aryl, stehen,
   - R³ und R⁴: unabhängig voneinander für unsubstituiertes oder substituiertes C₁-C₁₀-Alkyl oder unsubstituiertes oder substituiertes C₆-C₁₀-Aryl stehen oder
   - R³ und R⁴: zusammen für unsubstituiertes oder substituiertes C₃-C₁₀-Alkylen stehen,
   - y: die Zahlenwerte 0, 1 oder 2 bedeuten und
   - B: unabhängig für Wasserstoff, gegebenenfalls halogeniertes C₂-C₈- Alkyl, unsubstituiertes oder substituiertes C₆-C₁₀-Aryl steht.
E) 0,5 bis 40, vorzugsweise 1 bis 25, besonders bevorzugt 2 bis 15 Gew.-Teile feinteiliges anorganisches Pulver mit einem durchschnittlichen Teilchendurchmesser von kleiner gleich 200 nm, und
F) 0 bis 5 Gew.-Teile, vorzugsweise 0,1 bis 3 Gew.-Teile, besonders bevorzugt 0,1 bis 1 Gew.-Teile, ganz besonders bevorzugt 0,1 bis 0,5 Gew.-Teile eines fluorierten Polyolefins,
wobei die Summe der Gew.-Teile aller Komponenten A+B+C+D+E+F 100 ergibt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II) 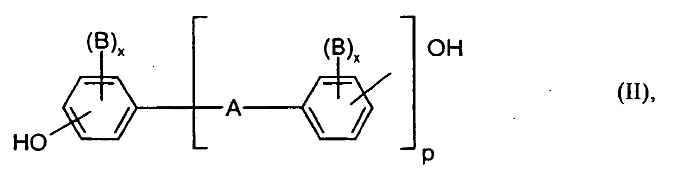 wobei
- A: eine Einfachbindung, C₁-C₅-Alkylen, C₂-C₅-Alkyliden, C₅-C₆-Cycloalkyli- den, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 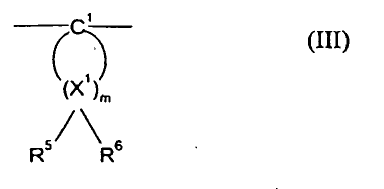 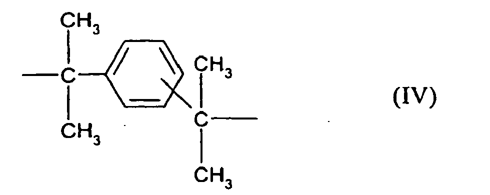
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, daß an mindestens einen Atom X¹, R⁵ und R⁶ gleichzeitig Alkyl sind.

Bevorzugte Diphenole sind Hydrochinon, Resocin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielseise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die Komponente B umfaßt ein oder mehrere Pfropfpolymerisate von
B.1 5 bis 95, vorzugsweise 30 bis 80 Gew.-%, wenigstens eines Vinylmonomeren auf
B.2 95 bis 5, vorzugsweise 70 bis 20 Gew.-% einer oder mehrerer Pfropfgrundlagen mit Glasübergangstemperaturen < 10°C, vorzugsweise < 0°C, besonders bevorzugt < -20°C.
   Die Pfropfgrundlage B.2 hat im allgemeinen eine mittlere Teilchengröße (d₅₀-Wert) von 0,05 bis 5 µm, vorzugsweise 0,10 bis 0,5 µm, besonders bevorzugt 0,20 bis 0,40 µm.
   Monomere B. 1 sind vorzugsweise Gemische aus
   B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
   B.1.2 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb <10°C, vorzugsweise <0°C, besonders bevorzugt <-10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymterisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphttialat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

### Komponente C

Die Komponente C umfaßt ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₈)-Alk-ylester wie z.B. Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate gemäß Komponente C.1 besitzen vorzugsweise Molekulargewichte M_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew.-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponenten D

Die erfindungsgemäßen Formmassen enthalten als Flammschutzmittel wenigstens eine Phosphonataminverbindung der Formel (I)

A_{3-y}-NB_{y} (I),

in welcher
A für 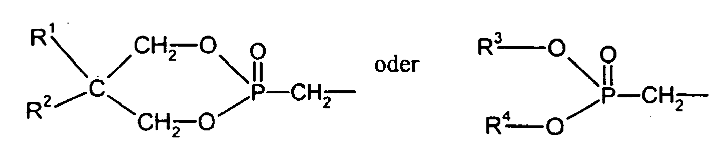 steht,
wobei
R¹, R², R³ und R⁴ sowie B und y die oben angegebene Bedeutung haben.
- B: steht vorzugsweise unabhängig für Wasserstoff, für Ethyl, n- oder iso-Propyl, welche durch Halogen substituiert sein können, unsubstituiertes oder durch C₁-C₄-Alkyl und/oder Halogen substituiertes C₆-C₁₀-Aryl, insbesondere Phenyl oder Naphthyl.

Alkyl in R¹, R², R³ und R⁴ steht unabhängig vorzugsweise für Methyl, Ethyl, n-Propyl, iso-Propyl, n-, iso-, sec. oder tert. Butyl, Pentyl oder Hexyl.

Substituiertes Alkyl in R¹, R², R³ und R⁴ steht unabhängig vorzugsweise für durch Halogen substituiertes C₁-C₁₀-Alkyl, insbesondere für ein- oder zweifach substituiertes Methyl, Ethyl, n-Propyl, iso-Propyl, n-, iso-, sec. oder tert.-Butyl, Pentyl oder Hexyl.

R³ und R⁴ bilden zusammen mit dem Kohlenstoff, an das sie gebunden sind, vorzugsweise Cyclopentyl, Cyclohexyl, Cycloheptyl oder Cyclooctyl, insbesondere Cyclopentyl oder Cyclohexyl.

C₆-C₁₀-Aryl steht in R¹, R², R³ und R⁴ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

Beispielhaft und vorzugsweise werden genannt: 5,5,5',5',5",5"-Hexamethyl-tris(1,3,2-dioxaphosphonan-methan)amin-2,2',2"-trioxid der Formel (I-1) 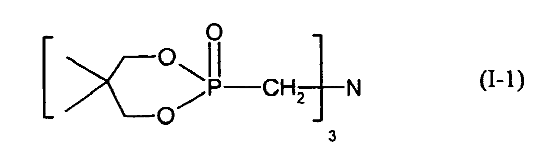 (Versuchsprodukt XPM 1000 Fa. Solutia Inc., St. Louis, USA)
1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3.2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-dichloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimcthyl-1,3,2-dioxaphosphorinan-2-yl)methan]-N-(2-chloroethyl)-5,5-di(chloromethyl)-, P2-dioxid.

Bevorzugt sind weiterhin:
Verbindungen der Formel (I-2) oder I-3) 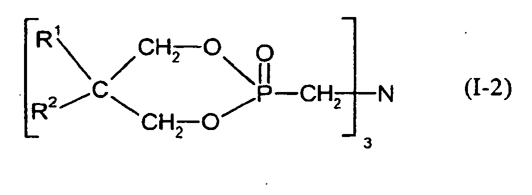 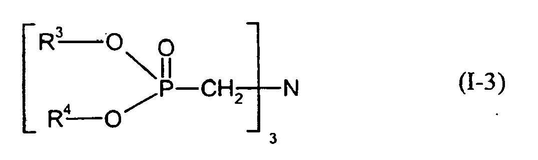 wobei
   R¹, R², R³ und R⁴ die oben angegebenen Bedeutungen haben.

Besonders bevorzugt sind Verbindungen der Formel (I-2), (I-1). Besonders bevorzugt sind auch die oben genannten Einzelverbindungen.

Die Verbindungen der Formel (I) können nach folgenden Verfahren hergestellt werden:
a) PCl₃ wird zu einer Mischung von 1,3-Diol-Derivaten, Wasser und einem organischen Lösungsmittel bei einer Temperatur von 10-60°C zugegeben. Man erhält dabei ein 5,5-disubstituiertes 1,3,2-Dioxaphosphorinan-2-oxid der Formel (Ia) 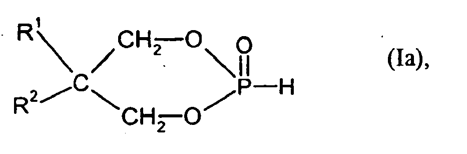 wobei R₁ und R₂ die oben genannte Bedeutung haben,
b) nach Reinigung wird das 1,3,2-Dioxaphosphorinan-2-oxid in Paraformaldehyd mit einem Amin B_{y}NH_{3-y}, wobei B und y die oben genannte Bedeutung haben, zur Reaktion gebracht,
c) nach erneuter Reinigung und Trocknung wird das Phosphonatamin der Formel (I) erhalten.

Eine detailierte Beschreibung des Herstellungsverfahren kann aus US-Patentschrift 5 844 028 entnommen werden.

### Komponente E

Die Komponente E umfaßt feinstteilige anorganische Pulver.

Die erfindungsgemäß zum Einsatz kommenden feinstteiligen anorganischen Pulver E bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe mit wenigstens einem Element ausgewählt aus Sauerstoff, Wasserstoff, Schwefel, Phosphor, Bor, Kohlenstoff, Stickstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Pulver aus Oxiden, Phosphaten, Hydroxiden, vorzugsweise aus TiO₂ SiO₂ SnO₂, ZnO, ZnS, Böhmit, ZrO₂, Al₂O₃, Aluminiumphosphate, ferner TiN, WC, AIO(OH), Sb₂O₃, Eisenoxide, NaSO₄, Vanadiumoxide, Zinkborat, Silicate wie Al-Silikate, Mg-Silikate, ein-, zwei-, dreidimensionale Silikate. Mischungen und dotierte Verbindungen sind ebenfalls verwendbar.

Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide, z.B. Böhmit oder TiO₂.

Die durchschnittlichen Teilchendurchmesser der Nanopartikel sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782-796.

Das anorganische Pulver wird in Mengen von 0,5 bis 40, vorzugsweise 1 bis 25, besonders bevorzugt von 2 bis 15 Gew.-%, bezogen auf das thermoplastische Material in die thermoplastische Formmasse eingearbeitet.

Die anorganischen Verbindungen können als Pulver, Pasten, Sole Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Formmassen eingearbeitet werden, beispielsweise durch direktes Kneten oder Extrudieren von Formmassen und den feinstteiligen anorganischen Pulvern. Bevorzugte Verfahren stellen die Herstellung eines Masterbatch, z.B. in Flammschutzadditiven und wenigstens einer Komponente der erfindungsgemäßen Formmassen in Monomeren oder Lösungsmitteln, oder die Cofällung von einer thermoplastischen Komponente und den feinstteiligen anorganischen Pulvern, z.B. durch Cofällung einer wäßrigen Emulsion und den feinstteiligen anorganischen Pulvern dar, gegebenenfalls in Form von Dispersionen, Suspensionen, Pasten oder Solen der feinstteiligen anorganischen Materialien.

### Komponente F

Die fluorierten Polyolefine F sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine F eine Dichte von 1,2 bis 2,3 g/cm³. Bevorzugte fluorierte Polyolefine F sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine F sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate F mit Emulsionen der Pfropfpolymerisate B eingesetzt.

Geeignete, in Pulverform einsetzbare fluorierte Polyolefine F sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B und F wird zuerst eine wäßrige Emulsion (Latex) eines Pfropfpolymerisates B mit einer feinteiligen Emulsion eines Tetrafluorethylenpolymerisates F vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gleichgewichtsverhältnis Pfropfpolymerisat B zum Tetrafluorethylenpolymerisat F bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon^{®} 30 N angeboten.

Die erfindungsgemäßen Formmassen können weingstens eines der üblichen Additive, wie Gleit- und Entformungsmittel, Nukleiermittel, Anmtistatika, Stabilisatoren sowie Farbstoffe und Pigmente enthalten.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Phosphorverbindungen wie beispielsweise beschrieben in EP-A 363 608, EP-A 345 522 und EP-A 640 655, organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumdioxid und Zinnoxid sowie Siloxanverbindungen genannt.

Weiterhin sind als Flammschutzmittel Phosphorverbindungen der Formel (V) geeignet, 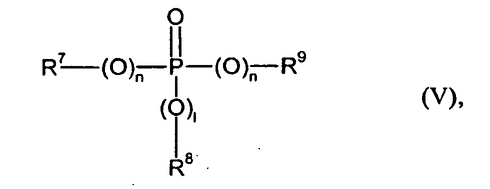 in der
- R⁷, R⁸ und R⁹: unabhängig voneinander ein gegebenenfalls halogeniertes C₁-C₈- Alkyl oder ein gegebenenfalls halogeniertes und/oder alkyliertes C₅- oder C₆- Cycloalkyl oder ein gegebenenfalls halogeniertes und/oder alkyliertes und/ oder aralkyliertes C₆-C₃₀-Aryl, und
- "n" und "1": unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979 und EP-A 345 522). Die aralkylierten Phosphorverbindungen sind beispielsweise in der DE-OS 38 24 356 beschrieben.

Gegebenenfalls halogenierte C₁-C₈-Alkylreste gemäß (V) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte C₅-oder C₆-Cycloalkyle gemäß (V) sind gegebenenfalls einfach bis mehrfach halogenierte und/oder alkylierte C₅- oder C₆-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte C₆-C₃₀-Arylreste gemäß (V) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Bevorzugt stehen R⁷, R⁸ und R⁹ unabhängig voneinander für Methyl, Ethyl, Butyl, Octyl, Phenyl, Kresyl, Cumyl oder Naphthyl. Besonders bevorzugt stehen R⁷, R⁸ und R⁹ unabhängig voneinander für Methyl, Ethyl, Butyl, gegebenenfalls durch Methyl und/oder Ethyl substituiertes Phenyl.

Erfindungsgemäß einsetzbare Phosphorverbindungen gemäß Formel (V) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, wie beispielsweise in der EP-A-0 363 608 beschrieben.

Die erfindungsgemäßen Formmassen können als Flammschutzmittel Phosphorverbindungen gemäß Formel (VI) enthalten,

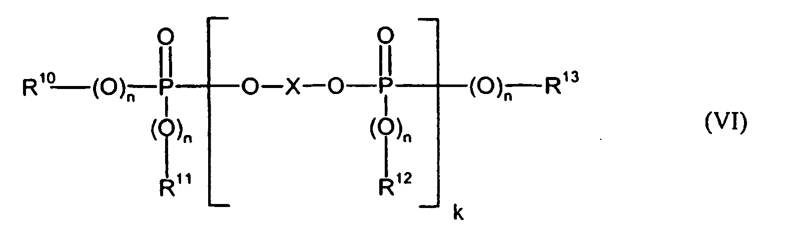

In der Formel stehen R¹⁰, R¹¹, R¹² und R¹³, unabhängig voneinander für jeweils gegebenenfalls halogeniertes C₁-C₈-Alkyl, C₅-C₆-Cycloalkyl, C₆-C₂₀-Aryl oder C₇-C₁₂-Aralkyl.

Bevorzugt stehen R¹⁰, R¹¹, R¹² und R¹³ unabhängig voneinander für C₁-C₄-Alkyl, Phenyl, Naphthyl oder Phenyl-C₁-C₄-alkyl. Die aromatischen Gruppen R¹⁰, R¹¹, R¹² und R¹³ können ihrerseits mit Halogen- und/oder Alkylgruppen, vorzugsweise Chlor, Brom und/oder C₁-C₄-Alkyl substituiert sein. Besonders bevorzugte ArylReste sind Kresyl, Phenyl, Xylenyl, Propylphenyl oder Butylphenyl sowie die entsprechenden bromierten und chlorierten Derivate davon.
- X: in der Formel (VI) bedeutet einen ein- oder mehrkernigen aromatischen Rest mit 6 bis 30 C-Atomen. Dieser leitet sich vorzugsweise von Diphenolen der Formel (I) ab. Besonders bevorzugt sind Diphenylphenol, Bisphenol A, Re- sorcin oder Hydrochinon oder deren chlorierte oder bromierte Derivaten
- n: in der Formel (VI) kann, unabhängig voneinander, 0 oder 1 sein, vorzugs- weise ist n gleich 1.
- k: steht für Werte von 0 bis 30, vorzugsweise für einen durchschnittlichen Wert von 0,3 bis 20 , besonders bevorzugt 0,5 bis 10, insbesondere 0,5 bis 6.

Einsetzbar sind auch Mischungen aus 10 bis 90 Gew.-%, vorzugsweise 12 bis 40 Gew.-%, wenigstens einer Monophosphorverbindung der Formel (V) und wenigstens einer oligomeren Phosphorverbindung beziehungsweise eines Gemisches von oligomeren Phosphorverbindungen wie in EP-A-363 608 beschrieben sowie Phosphorverbindungen gemäß Formel (VI) in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (V) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Mischungen aus monomeren und oligomeren Phosphorverbindungen der Formel (VI) weisen durchschnittliche k-Werte von 0,3 bis 20, bevorzugt 0,5 bis 10, insbesondere von 0,5 bis 6 auf.

Die genannten Phosphorverbindungen sind bekannt (vg1. z.B. EP-A-363 608, EP-A-640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die erfindungsgemäßen Formmassen enthaltend die Komponenten A bis F und gegebenenfalls weitere bekannte Zusätze wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperatuern von 200°C bis 300°C in üblichen Aggregaten wie Innenknetem, Extrudern und Doppelwellenschnecken schmelzcompoundiert und schmelzextrudiert, wobei die Komponente F vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammfestigkeit und Wärmeformbeständigkeit sowie ihren guten Eigenschaften wie Bindenahtfestigkeit und ESC-Verhalten (Spannungsrißbeständigkeit) zur Herstellung von Formkörpern jeglicher Art, insbesondere solchen mit erhöhten Anforderungen an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:
Innenausbauteile für Schinenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formkörper durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Lineares Polycarbonat auf Basis Bisphenol A mit einer relativen Lösungsviskosität von 1,252, gemessen in CH₂Cl₂ als Lösungsmittel bei 25°C und einer Konzentration von 0,5 g/100 ml.

### Komponente B

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser d₅₀ = 0,28 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

Phosphonatamin der Formel: 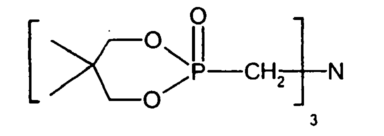 (XPM 1000 Entwicklungsprodukt Fa. Solutia Inc., St.. Louis, USA)

### Komponente E

Pural^{®} 200, ein Aluminiumoxidhydroxid (Fa. Condea, Hamburg, Deutschland), mittlere Teilchengröße ca. 50 nm.

### Komponente F

Tetrafluorethylenpolymerisat als koagulierte Mischung aus einer SAN-Pfropfpolymerisat-Emulsion gemäß o.g. Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von d₅₀ = 0,28 µm.

### Herstellung von F

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm.

Die Bestimmung der Kerbschlagzähigkeit aₖ wird gemäß ISO 180/1 A durchgeführt.

Zur Ermittlung der Bindenahtfestigkeit wird die Schlagzähigkeit nach DIN 53 453 an der Bindenaht von beidseitig ausgespritzten Prüfkörpern (Verarbeitungstemperatur: 260°C) der Dimension 170 x 10 x 4 mm gemessen.

Das Brandverhalten der Proben wurde nach UL-Subj. 94 V an Stäben der Abmessung 127 x 12,7 x 1,6 mm gemessen, hergestellt auf einer Spritzgußmaschine bei 260°C.

Der UL 94 V-Test wird wie folgt duchgeführt:
Substanzproben werden zu Stäben der Abmessungen 127 x 12,7 x 1,6 mm geformt. Die Stäbe werden vertikal so montiert, daß die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 100 mm (3,8 inch) hohen blauen Flamme von Erdgas mit einer Wärmeeinheit von 3,73 x 10⁴ kJ/m³ (1000 BTU per cubic foot) benutzt.

Die UL 94 V-O-Klassifizierung umfaßt die nachstehend beschriebenen Eigenschaften von Materialien, die gemäß der UL 94 V-Vorschrift geprüft werden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig oder weniger selbstverlöschend sind, weil sie flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

Das Spannungsrißverhalten (ESC-Verhalten) wird an Stäben der Abmessung 80 x 10 x 4 mm, Verarbeitungstemperatur 260°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung in Prozent) und bei Raumtemperatur im Testmedium gelagert. Das Spannungsrißverhalten wird über die Rißbildung bzw. den Bruch in Abhängigkeit von der Vordehnung im Testmedium beurteilt.

Eine Zusammenstellung der Eigenschaften der erfindungsgemäßen Formmassen ist in der nachfolgenden Tabelle 1 gegeben:
Durch Verwendung der Kombination aus Phosphonataminem und feinstteiligem anorganischen Pulver werden hochwärmeformbeständige Formmassen erhalten, die sich durch sehr gute mechanische Eigenschaften wie Tieftemperatur-Kerbschlagzähigkeit, Spannungsrißbeständigkeit, Bindenahtfestigkeit und Reißdehnung sowie einen verringerten Yellowness-Grad auszeichnen. Der Flammschutz der erfindungsgemäßen Formmassen wird durch den Zusatz feinstteiligen anorganischen Pulvers deutlich verbessert.

**Tabelle: Formmassen und ihre Eigenschaften**

| | 1 (Vgl) | 2 |
|---|---|---|
| Komponenten [Gew.-Tle] | | |
| A | 68,50 | 67,96 |
| B | 6,80 | 6,75 |
| C | 9,30 | 9,23 |
| D | 10,80 | 10,72 |
| E | - | 0,74 |
| F | 4,2 | 4,2 |
| Entformungsmittel | 0,4 | 0,4 |
| Eigenschaften | | |
| aₖ [kJ/m²] -20°C | 13 | 13,5 |
| Vicat B 120 [°C] | 116 | 117 |
| aₙ (Bindenaht) [kJ/m²] | 4,9 | 5,5 |
| ESC-Verhalten: | | |
| Bruch bei εₓ [%] | 1,8 | 2,4 |
| UL 94 V 1,6 mm | N.B. | V1 |
| Reißdehnung DR [%] | 40 | 55 |
| Yellowness Index | 58,5 | 52,2 |

| | | |
|---|---|---|
| N.B. = Nicht bestanden | | |

## Patentansprüche

1. Blends enthaltend Polycarbonat und/oder Polyestercarbonat, pfropfpolymerisat, Phosphonatamin und anorganisches Pulver mit einem durchschnittlichen Teilchendurchmesser kleiner gleich 200 nm.

2. Blends gemäß Anspruch 1, enthaltend 0,1 bis 30 Gew.-Teile Phosphonatamin der Formel (I)
A_{3-y}-N-B_{y} (I),
in welcher
A für einen Rest der Formel (IIa) 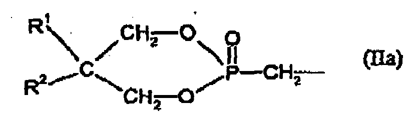 oder (IIb) 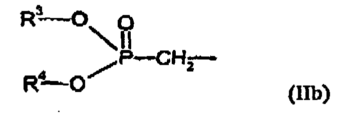 steht,
R¹ und R² unabhängig voneinander für unsubstituiertes oder substituiertes C₁-C₁₀-Alkyl oder für unsubstituiertes oder substituiertes C₆-C₁₀- Aryl, stehen,
R³ und R⁴ unabhängig voneinander für unsubstituiertes oder substituiertes C₁-C₁₀-Alkyl oder unsubstituiertes oder substituiertes C₆-C₁₀-Aryl stehen oder
R³ und R⁴ zusammen für unsubstituiertes oder substituiertes C₃-C₁₀-Alkylen stehen,
y die Zahlenwerte 0, 1 oder 2 bedeutet und
B unabhängig für Wasserstoff, gegebenenfalls halogeniertes C₂-C₈- Alkyl, unsubstituiertes oder substituiertes C₆-C₁₀-Aryl steht,
und 0,5 bis 40 Gew.-Teile feinteiliges anorganisches Pulver, wobei die Mengenangaben bezogen sind auf die Gesamtmischung.

3. Blends gemäß Anspruch 1 oder 2 enthaltend
A) 40 bis 99 Gew.-Teile aromatisches Polycarbonat und/oder Polyestercarbonat,
B) 0,5 bis 60 Gew.-Teile Pfropfpolymerisat von
B.1) 5 bis 95 New.-% eines oder mehrerer Vinylmonomeren auf
B.2) 95 bis 5 Gew.-% einer oder mehrerer Pfropfgrundlagen mit einer Glasumwandlungstemperatur <10°C,
C) 0 bis 45 Gew -Teile mindestens eines thermoplastischen Polymers, ausgewählt aus der Gruppe der Vinyl(co)polymerisate und Polyalkylenterephthalate,
D) 0,1 bis 30 Gew.-Teile eines Phosphonatamins der allgemeinen Formel (I) gemäß Anspruch 2,
E) 0,5 bis 40 Gew.-Teile feinteiliges anorganisches Pulver mit einem durchschnittlichen Teilchendurchmesser von kleiner gleich 200 nm, und
F) 0 bis 5 Gew.-Teile eines fluorierten Polyolefins,
wobei die Summe der Gew.-Teile aller Blendkomponenten 100 ergibt.

4. Blends gemäß Anspruch 3, enthaltend
60 bis 98,5 Gew.-Teile A,
1 bis 40 Gew.-Teile B,
0 bis 30 Gew.-Teile C,
1 bis 25 Gew.-Teile D,
1 bis 25 Gew.-Teile E,
0,15 bis I Gew.-Teile F.

5. Blends gemäß Anspruch 3 oder 4, enthaltend 2 bis 25 Gew.-Teile C.

6. Blends gemäß der Ansprüche 3 bis 5, enthaltend 2 bis 20 Gew.-Teile D.

7. Blends gemäß einem der vorhergehenden Ansprüche 3 bis 6, wobei Vinylmonomere B.1 Gemische sind aus
B.1.1 50 bis 99 Gew.-Teilen Vinylaromaten und/oder kersubstituierten Vinylaromaten und/oder Mothacrylsäure-(C₁-C₈)-Alkylester und
B.1.2 1 bis 50 Gew.-Teilen Vinylcyanide und/oder (Meth)Acrylsäure-C₁-C₈)-Alkylester und/oder Derivate ungesättigter Carbonsäuren.

8. Blends gemäß Anspruch 3, wobei die Pfropfgrundlage ausgewählt ist aus mindestens einem Kautschuk aus der Gruppe der Dienkautschuke, EP(D)M-Kautschuke, Acrylat-, Polyurethan-, Silikon-, Chloropren- und Ethylen/Vinylacetat-Kautschuk.

9. Blends nach einem oder mehreren der vorangegangenen Ansprüche, wobei die Phosphonatamine D) Verbindungen der Formel (I-2) sind, 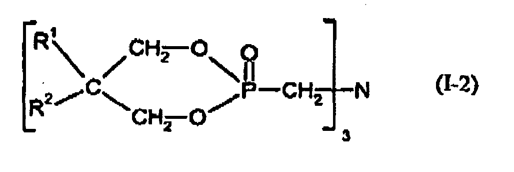 wobei
R¹ und R² die in Anspruch 2 angegebenen Bedeutungen haben.

10. Blends gemäß einem der vorhergehenden Ansprüche 3 bis 9, wobei Komponente E aus wenigstens einer polaren Verbindung von einem oder mehreren Metallen der 1, bis 5, Hauptgruppe oder 1 bis 8. Nebengruppe des Periodensystems mit wenigstens einem Element ausgewählt aus Sauerstoff, Wasserstoff, Schwefel, Phosphor, Bor, Kohlenstoff, Stickstoff oder Silicium ausgewählt ist.

11. Blends gemäß Anspruch 10, wobei Komponente E aus wenigstens einer polaren Verbindung von einem oder mehreren Metallen der 2. bis 5. Hauptgruppe oder 4. bis 8. Nebengruppe mit wenigstens einem Element ausgewählt aus Sauerstoff, Wasserstoff, Schwefel, Phosphor, Bor, Kohlenstoff, Stickstoff oder Silicium ausgewählt ist.

12. Blends gemäß Anspruch 11, wobei Komponente E aus wenigstens einer polaren Verbinung von einem oder mehreren Metallen der 3 bis 5 Hauptgruppe oder 4. bis 8 Nebengruppe des Periodensystems mit wenigstens einem Element ausgewählt aus Sauerstoff, Wasserstoff, Schwefel, Phosphor, Bor, Kohlenstoff, Stickstoff oder Silicium ausgewählt ist.

13. Blends gemäß einem der vorhergehenden Ansprüche 3 bis 12, wobei Komponente E ausgewählt ist aus mindestens einem Oxid, Hydroxid, wasserhaltigem Oxid, Sulfat, Sulfit, Sulfid, Carbonat, Carbid, Nitrat, Nitrit, Nitrid, Borat, Silikat, Phosphat, Hydrid, Phosphit und Phosphonat.

14. Blends gemäß einem der vorhergehenden Ansprüche 3 bis 13, wobei Komponente E ausgewählt ist aus Oxiden, Phosphaten und Hydroxiden.

15. Blends gemäß einem der vorhergehenden Ansprüche 3 bis 14, wobei Komponente E ausgewählt ist aus TiO₂, SiO₂, SnO₂, ZnO, ZnS, Böhmit, ZrO₂, Al₂O₃, Aluminiumphosphate, Eisenoxide, TiN, WC, AIO(OH), Sb₂O₃, Na₂SO₄, Vanadiumoxide, Zinkborat, Silicate wie Al-Silikate, Mg-Silikate, ein-, zwei-, dreidimensionale Silikate, deren Mischugnen und dotierte Verbindungen.

16. Blends gemäß einem der vorhergehenden Ansprüche 3 bis 15, wobei Komponente E ausgewählt ist aus hydrathaltigen Aluminiumoxiden, TiO₂ und Mischungen davon.

17. Blends gemäß der vorhergehenden Ansprüche, enthaltend wenigstens ein Additiv ausgewählt aus der Gruppe der Gleit- und Entformungsmittel, Nukleiermittel, Antistatika, Stabilisatoren, Farbstoffe und Pigmente.

18. Blends gemäß einem der vorhergehenden Anspüche 3 bis 16 enthaltend weitere Flammschutzmittel, welche verschieden sind von Komponente D.

19. Verfahren zur Herstellung von Formmassen gemäß Anspruch 3 bis 18, wobei die Komponenten A bis E und gegebenenfalls weitere Zusätze vermischt und schmelzcompoundiert werden.

20. Verwendung der Formmassen gemäß Anspruch 1 bis 18 zur Herstellung von Formkörpern.

21. Formkörper, erhältlich aus Formmassen gemäß der Ansprüche 1 bis 18.

22. Gehäuseteile gemäß Anspruch 21.

## Claims

1. Blends containing polycarbonate and/or polyester-carbonate, graft polymer, phosphonatamine and inorganic powder, having an average particle diameter of less than 200 nm.

2. Blends according to claim 1, containing 0.1 to 30 parts by wt. of phosphonatamine of the formula (I)
A_{3-y}-N-B_{y} (I),
in which
A represents a radical of the formula (IIa) 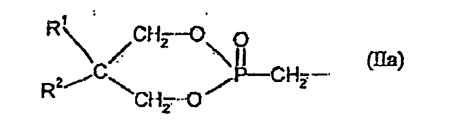 or (IIb) 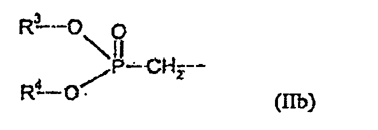
R¹ and R² independently of each other represent unsubstituted or substituted C₁-C₁₀-alkyl or unsubstituted or substituted C₆-C₁₀-aryl,
R³ and R⁴ independently of each other represent unsubstituted or substituted C₁-C₁₀-alkyl or unsubstituted or substituted C₆-C₁₀-aryl or
R³ and R⁴ together represent unsubstituted or substituted C₃-C₁₀-alkylene,
y denotes the numerical values 0, 1 or 2 and
B independently represents hydrogen, optionally halogenated C₂-C₈-alkyl or unsubstituted or substituted C₆-C₁₀-aryl,
and 0.5 to 40 parts by wt. of finely divided inorganic powder, wherein the amounts stated are based on the total mixture..

3. Blends according to claim 1 or 2, containing
A) 40 to 99 parts by wt. of aromatic polycarbonate and/or polyester-carbonate,
B) 0.5 to 60 parts by wt.. of graft polymer of
B.1) 5 to 95 wt..% of one or more vinyl monomers on
B.2) 95 to 5 wt. % of one or more graft bases having a glass transition temperature of < 10 °C,
C) 0 to 45 parts by wt. of at least one thermoplastic polymer chosen from the group of vinyl (co)polymers and polyalkylene terephthalates,
D) 0.1 to 30 parts by wt. of a phosphonatamine of the general formula (I) according to claim 2,
E) 0.5 to 40 parts by wt. of finely divided inorganic powder having an average particle diameter of less than 200 nm and
F) 0 to 5 parts by wt. of a fluorinated polyolefin
wherein the sum of the parts by wt. of all the blend components is 100.

4. Blends according to claim 3, containing
60 to 98.5 parts by wt. of A,
1 to 40 parts by wt. of B,
0 to 30 parts by wt. of C,
1 to 25 parts by wt. of D,
1 to 25 parts by wt. of E,
0.15 to 1 part by wt. of F.

5. Blends according to claim 3 or 4, containing 2 to 25 parts by wt.. of C..

6. Blends according to claims 3 to 5, containing 2 to 20 parts by wt. of D.

7. Blends according to one of the preceding claims 3 to 6, wherein vinyl monomers B..1 are mixtures of
B.1.1 50 to 99 parts by wt. of vinylaromatics and/or vinylaromatics substituted on the nucleus and/or methacrylic acid (C₁-C₆) -alkyl esters and
B.1.2 1 to 50 parts by wt. of vinyl cyanides and/or (meth)acrylic acid (C₁-C₈)-alkyl esters and/or derivatives of unsaturated carboxylic acids.

8. Blends according to claim 3, wherein the graft base is chosen from at least one rubber from the group of diene rubbers, EP(D)M rubbers and acrylate, polyurethane, silicone, chloroprene and ethylene/vinyl acetate rubber.

9. Blends according to one or more of the preceding claims, wherein the phosphonatamines D) are compounds of the formula (I-2) 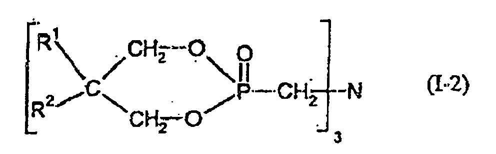 wherein
R¹ and R² have the meanings given in claim 2..

10. Blends according to one of the preceding claims 3 to 9, wherein component E is chosen from at least one polar compound of one or more metals of main group 1 to 5 or sub-group 1 to 8 of the periodic table with at least one element chosen from oxygen, hydrogen, sulfur, phosphorus, boron, carbon, nitrogen or silicon.

11. Blends according to claim 10, wherein component E is chosen from at least one polar compound of one or more metals of main group 2 to 5 or sub-group 4 to 8 with at least one element chosen from oxygen, hydrogen, sulfur, phosphorus, boron, carbon, nitrogen or silicon..

12. Blends according to claim 11, wherein component E is chosen from at least one polar compound of one or more metals of main group 3 to 5 or sub-group 4 to 8 of the periodic table with at least one element chosen from oxygen, hydrogen, sulfur, phosphorus, boron, carbon, nitrogen or silicon.

13. Blends according to one of the preceding claims 3 to 12, wherein component E is chosen from at least one oxide, hydroxide, water-containing oxide, sulfate, sulfite, sulfide, carbonate, carbide, nitrate, nitrite, nitride, borate, silicate, phosphate, hydride, phosphite and phosphonate.

14. Blends according to one of the preceding claims 3 to 13, wherein component E is chosen from oxides, phosphates and hydroxides.

15. Blends according to one of the preceding claims 3 to 14, wherein component E is chosen from TiO₂, SiO₂, SnO₂, ZnO, ZnS, boehmite, ZrO₂, Al₂O3, aluminium phosphates, iron oxides, TiN, WC, AlO (OH), Sb₂O₃, Na₂SO₄, vanadium oxides, zinc borate and silicates, such as Al silicates, Mg silicates, one-, two- and three-dimensional silicates, mixtures thereof and doped compounds.

16. Blends according to one of the preceding claims 3 to 15, wherein component E is chosen from hydrate-containing aluminium oxides, TiO₂ and mixtures thereof.

17. Blends according to the preceding claims, containing at least one additive chosen from the group of lubricants and mould release agents, nucleating agents, antistatics, stabilizers, dyestuffs and pigments.

18. Blends according to one of the preceding claims 3 to 16, containing further flameproofing agents which differ from component D.

19. Process for the preparation of moulding compositions according to claim 3 to 18, wherein components A to E and optionally further additives are mixed and subjected to melt compounding.

20. Use of the moulding compositions according to claim 1 to 18 for the preparation of shaped articles.

21. Shaped articles obtainable from moulding compositions according to claims 1 to 18.

22. Housing parts according to claim 21.

## Revendications

1. Mélanges contenant du polycarbonate et/ou du polyester carbonate, un polymère greffé, une phosphonate amine et de la poudre inorganique avec un diamètre moyen de particules inférieur ou égal à 200 nm.

2. Mélanges selon la revendication 1 contenant de 0,1 à 30 parties en poids de phosphonate amine de la formule (I)
A_{3-y}-N-B_{y} (I),
dans laquelle
A représente un reste de la formule (IIa) 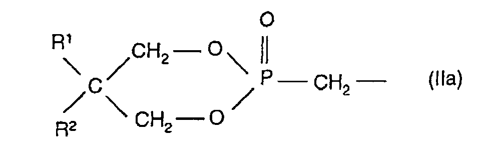 ou (IIb) 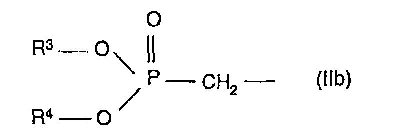 R¹ et R² représentent indépendamment l'un de l'autre un groupe C₁-C₁₀-alkyle substitué ou non substitué ou un groupe C₆-C₁₀-aryle substitué ou non substitué,
R³ et R⁴ représentent indépendamment l'un de l'autre un groupe C₁-C₁₀-alkyle substitué ou non substitué ou un groupe C₆-C₁₀-aryle substitué ou non substitué ou
R³ et R⁴ représentent ensemble un groupe C₃-C₁₀-alkylène substitué ou non substitué,
Y représente les valeurs numériques 0,1 ou 2,
B représente indépendamment l'atome d'hydrogène, un groupe C₂-C₈-alkyle éventuellement halogéné, un groupe C₆-C₁₀-aryle substitué ou non substitué, et
de 0,5 à 40 parties en poids de poudre inorganique en fines particules, les indications de quantité étant rapportées au mélange total.

3. Mélanges selon la revendication 1 ou 2 contenant
A) de 40 à 99 parties en poids de polycarbonate aromatique et/ou de polyester carbonate,
B) de 0,5 à 60 parties en poids de polymère greffé de
B.1) de 5 à 95 % en poids d'un ou plusieurs monomères vinyliques sur
B.2) de 95 à 5 % en poids d'une ou plusieurs bases de greffage avec une température de transition vitreuse <10°C,
C) de 0 à 45 parties en poids d'au moins un polymère thermoplastique choisi dans le groupe des (co)polymères vinyliques et du poly(alkylène téréphtalate),
D) de 0,1 à 30 parties en poids d'une phosphonate amine de la formule générale (I) selon la revendication 2,
E) de 0,5 à 40 parties en poids de poudre inorganique en fines particules avec un diamètre moyen de particules inférieur ou égal à 200 nm, et
F) de 0 à 5 parties en poids d'une polyoléfine fluorée,
la somme des parties en poids de tous les constituants du mélange étant égale à 100..

4. Mélanges selon la revendication 3 contenant
de 60 à 98,5 parties en poids de A,
de 1 à 40 parties en poids de B,
de 0 à 30 parties en poids de C,
de 1 à 25 parties en poids de D,
de 1 à 25 parties en poids de E,
de 0,15 à 1 partie en poids de F.

5. Mélanges selon la revendication 3 ou 4 contenant de 2 à 25 parties en poids de C.

6. Mélanges selon les revendications 3 à 5 contenant de 2 à 20 parties en poids de D.

7. Mélanges selon l'une des revendications 3 à 6 précédentes, dans lesquels les monomères vinyliques B.1 sont des mélanges constitués de
B.1.1 de 50 à 99 parties en poids de composés aromatiques vinyliques et/ou de composés aromatiques vinyliques substitués au noyau et/ou de méthacrylate de C₁-C₈-alkyle et
B.1.2 de 1 à 50 parties en poids de cyanure de vinyle et/ou de (méth)acrylate de C₁-C₈-alkyle et/ou de dérivés d'acides carboxyliques insaturés.

8. Mélanges selon la revendication 3, dans lesquels la base de greffage est choisie parmi au moins un caoutchouc du groupe constitué des caoutchoucs de diènes, des caoutchoucs d'EP(D)M, des caoutchoucs d'acrylate, de polyuréthane, de silicone, de chloroprène et d'éthylène/acétate de vinyle.

9. Mélanges selon l'une ou plusieurs quelconque des revendications précédentes, dans lesquels les phosphonates amines (D) sont des composés de la formule (1-2) 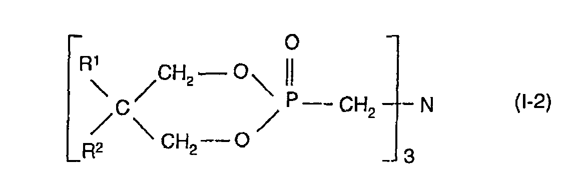 dans laquelle
R¹ et R² ont les significations indiquées dans la revendication 2.

10. Mélanges selon l'une quelconque des revendications 3 à 9 précédentes, dans lesquels le constituant E est choisi parmi au moins un composé polaire d'un ou plusieurs métaux du 1^{er} au 5^{ème} groupe principal ou du 1^{er} au 8^{ème} groupe secondaire de la classification périodique des éléments avec au moins un élément choisi parmi l'oxygène, l'hydrogène, le souffre, le phosphore, le bore, le carbone, l'azote ou le silicium.

11. Mélanges selon la revendication 10, dans lesquels le constituant E est choisi parmi au moins un composé polaire d'un ou plusieurs métaux du 2^{ème} au 5^{ème} groupe principal ou du 4^{ème} ou 8^{ème} groupe secondaire avec au moins un élément choisi parmi l'oxygène, l'hydrogène, le soufre, le phosphore, le bore, le carbone, l'azote ou le silicium.

12. Mélanges selon la revendication 11, dans lesquels le constituant E est choisi parmi au moins un composé polaire d'un ou plusieurs métaux du 3^{ème} au 5^{eme} groupe principal ou du 4^{ème} au 8^{ème} groupe secondaire de la classification périodique des éléments avec au moins un élément choisi parmi l'oxygène, l'hydrogène, le soufre, le phosphore, le bore, le carbone, l'azote ou le silicium.

13. Mélanges selon l'une quelconque des revendications 3 à 12 précédentes, dans lesquels le constituant E est choisi parmi au moins un oxyde, hydroxyde, oxyde contenant de l'eau, sulfate, sulfite, sulfure, carbonate, carbure, nitrate, nitrite, nitrure, borate, silicate, phosphate, hydrure, phosphite et phosphonate.

14. Mélanges selon l'une quelconque des revendications 3 à 13 précédentes, dans lesquels le constituant E est choisi parmi des oxydes, des phosphates et des hydroxydes.

15. Mélanges selon l'une quelconque des revendications 3 à 14 précédentes, dans lesquels le constituant E est choisi parmi TiO₂, SiO₂, SnO₂, ZnO, ZnS, la boehmite, ZrO₂, Al₂O₃, le phosphate d'aluminium, des oxydes de fer, TiN, WC, AlO(OH), Sb₂O₃, Na₂SO₄, l'oxyde de vanadium, le borate de zinc, des silicates comme des silicates d'Al, des silicates de Mg, des silicates mono-, bi-, tridimensionnels, des mélanges ou des composés dopés de ceux-ci.

16. Mélanges selon l'une quelconque des revendications 3 à 15 précédentes, dans lesquels le constituant E est choisi parmi des oxydes d'aluminium contenant des hydrates, T₁O₂ et des mélanges de ceux-ci.

17. Mélanges selon les revendications précédentes contenant au moins un additif choisi dans le groupe constitué des agents lubrifiants et de démoulage, des agents de nucléation, des antistatiques, des stabilisateurs, des colorants et des pigments.

18. Mélanges selon l'une quelconque des revendications 3 à 16 précédentes contenant d'autres agents ignifuges, lesquels sont différents du constituant D"

19. Procédé pour la préparation de matières moulées selon les revendications 3 à 18, dans lequel les constituants A à E et éventuellement d'autres additifs sont mélangés et combinés à l'état de masse en fusion.

20. Utilisation des matières de moulage selon la revendication 1 à 18 pour la préparation de corps moulés.

21. Corps moulés obtenus à partir de matières de moulage selon les revendications 1 à 18.

22. Pièces de boîtier selon la revendication 21.
